# EUROPEAN PATENT APPLICATION

(11) **EP 0 645 716 A1**
(43) Date of publication of application: **29.03.1995**
(21) Application number: 94306072.3
(22) Date of filing: 17.08.1994
(51) Int. Cl.: G06F 13/40, H04L 12/40

(54) **Termination circuits for SCSI host bus adapter**

(30) Priority: 24.09.1993 US 126297
(71) Applicant: ADVANCED MICRO DEVICES INC., Sunnyvale, California 94088-3453 (US)
(72) Inventor: Mah, Mark M., San Jose, CA 95131 (US)
(74) Representative: BROOKES & MARTIN

(57) **Abstract**

A termination circuit is provided for use in a SCSI host bus adapter which automatically inserts or removes an active terminator on the host adapter. The termination circuit includes a detection circuit for automatically sensing the presence of connections of an internal SCSI device and/or external SCSI device to the host adapter so as to generate an enable signal. Active terminators are responsive to the enable signal for selectively enabling its termination.

## Description

This invention relates generally to terminator devices and more particularly, it relates to an automatic termination circuit means used with a SCSI (acronym for small computer system interface) host bus adapter.

As is generally well-known in the art of computer equipment, a termination device is typically connected to each end of a SCSI bus line for supplying a fixed supply voltage with a predetermined impedance. One application where proper termination becomes important is where communication is to be established between a host small computer and a plurality of internal and/or external SCSI devices. The internal SCSI devices may be, for example, hard disk drives. Also, the external SCSI devices may be such as tape drives, CD-ROM drives, disk drives and the like.

The host small computer is formed conventionally with a SCSI controller (referred to sometimes as an initiator or host bus adapter) located internally on a printed circuit board (PCB) which is used to transfer data and control signals to the plurality of internal and/or external SCSI devices. The host bus adapter (HBA) board includes an active termination device or terminator for the SCSI data and control signal lines. Traditionally, the active terminator is implemented with a termination network arrangement referred to as a "regulated terminator" which includes an individual voltage regulator for receiving an input voltage TERMPWR and for generating a regulated voltage of approximately +2.85 volts and a separate unit of eighteen (18) 110 ohms resistors coupled to respective data and control signal lines. This method defines a discrete terminator. These 110-ohm resistors are usually packaged in a single-inline package (SIP) or dual-inline package (DIP) which are socketed on the HBA board. In order to decide whether the resistor package (SIP or DIP) has to be installed, the user must first determine the position of the HBA board.

There are also manufacturers who make an alternate termination arrangement referred to as a "hybrid terminator" in which the voltage regulator and the terminating resistors are both housed in a single SOIC/TSSOP package. In these hybrid terminators, there is provided generally an ENABLE pin which is driven by a logic signal so as to permit the insertion or removal of the termination from the SCSI bus line.

The HBA board further includes generally an external connector which is connectible via an external SCSI cable to the external SCSI device and an internal connector which is connectible via an internal SCSI cable to the internal SCSI device. The basic problem encountered is that when only the external SCSI device or internal SCSI device is connected to the HBA board the terminator on the HBA board must be inserted (enabled). Otherwise, the terminator on the HBA board must be removed (disabled). In other words, the terminator on the HBA board is not used when both an external SCSI device and an internal SCSI device are being connected to the HBA board.

In the past, there has been made an attempt to solve this problem by utilizing a socketed resistor package (internal resistor pack terminator) and an external terminator (external SCSI termination). In this technique, the internal terminator is only installed by the user if there are no internal SCSI devices connected to the internal SCSI cable. In this event, the internal terminator will be installed on the HBA board. On the other hand, if there is no external SCSI cable connected to the HBA board, the user will connect or install the external SCSI terminator to the HBA board. This approach suffers from the drawback that the user is required to know or be aware of the position of the host adapter board in the SCSI daisy chain. Further, the use of the external active terminator can be quite expensive thereby increasing the overall system cost.

Another prior art technique for implementing the active termination on the HBA board is to provide a register which is to be supported in the I/O or memory space of the host computer. This is referred to as a software-configurable termination. A bit in the register is set or reset by a software driver or the configuration software. If the bit is set, an external signal is generated so as to turn on a SCSI terminator device located on the HBA board. However, there is also a serious disadvantage in this prior art method since the user must still be aware of the position of the host adapter in the SCSI daisy chain before the option can be set. Thus, the concept of "Plug and Play" (no manipulation after connection of the SCSI cable) is undermined. Further, there is required additional hardware circuitry for decoding and implementing the register access as well as software programming which cause increased system complexity.

It would therefore be desirable to provide an improved termination circuit means for use on a SCSI host bus adapter which automatically inserts or removes the SCSI terminator on the host adapter dependent upon the connection(s) of the internal and/or external SCSI devices to the host bus adapter. Furthermore, it would be expedient that the termination circuit means be manufactured with a relatively small increase in the overall system cost.

Accordingly, we shall describe an improved terminator circuit for use on a SCSI host bus adapter which is relatively simple and economical to manufacture and assemble, and which automatically inserts or removes the SCSI terminator on the host adapter.

The circuit can be manufactured with a relatively small increase in the overall system cost, has a minimal number of components, and includes active terminators and a detection circuit.

In particular, we shall describe an improved termination circuit for use in a SCSI host bus adapter which automatically inserts or removes an active terminator on the host bus adapter. An internal connector means is provided for generating a first logic signal which is either high or low dependent upon whether an internal SCSI device is connected thereto. An external connector means is provided for generating a second logic signal which is either high or low dependent upon whether an external SCSI device is connected thereto. The termination circuit includes active terminator means which is responsive to an enable signal for automatically inserting or removing a termination on the bus adapter. The termination circuit further includes detection means which is responsive to the first logic signal from the internal connector means and to the second logic signal from the external connector means for generating the enable signal.

These and other objects and advantages of the present invention will become more fully apparent from the following detailed description when read in conjunction with the accompanying drawings with like reference numerals indicating corresponding parts throughout, wherein, by way of example only:
Figure 1 is a block diagram of a host bus adapter board having termination circuit means of the present invention, illustrating its connection to only internal SCSI devices;
Figure 2 is a block diagram of a host bus adapter board having termination circuit means of the present invention, illustrating its connection to only external SCSI devices;
Figure 3 is a block diagram of a host bus adapter board having termination circuit means of the present invention, illustrating its connection to one external SCSI device and to one internal SCSI device; and
Figures 4a and 4b, when connected together, is a schematic circuit diagram of a portion of the host bus adapter board having termination circuit means of Figures 1-3.

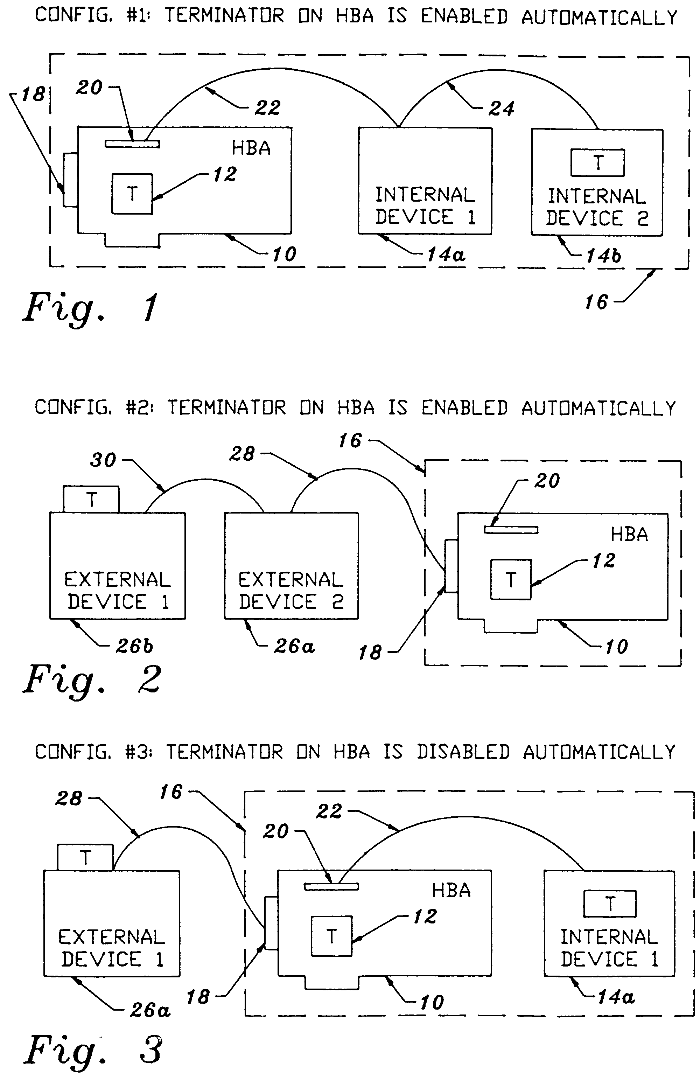

Referring now in detail to the drawings, there is shown in Figure 1 a SCSI bus configuration in which a host bus adapter board (HBA) 10 having termination circuit means 12 of the present invention is coupled to a plurality of internal SCSI devices 14a, 14b. The termination circuit means 12 is located on the HBA board 10 and is comprised of active terminators and a detection circuit. The HBA board 10 and the internal SCSI devices 14a, 14b are housed within a host small computer 16. As can be seen, the HBA board also includes an external SCSI connector 18 having a plurality of pins and an internal SCSI connector 20 having a plurality of pins. The internal connector 20 is joined to one end of an internal SCSI cable 22, and the other end of the cable 22 is connected to the internal SCSI device 14a. The internal SCSI device 14b is also joined to the internal SCSI device 14a via another internal SCSI cable 24.

In operation, the detection circuit of the termination circuit means 12 will detect or sense that there is only the internal SCSI device 14a connected to the host adapter board 10. In other words, there is sensed that no external SCSI device has been connected to the external SCSI connector 18. Thus, the active terminators of the termination circuit means 12 will be enabled (inserted) automatically so as to effect a proper termination at the HBA board 10.

In Figure 2, there is illustrated a second SCSI bus configuration in which the host bus adapter board 10 having the termination circuit means 12 of the present intention is coupled to a plurality of external SCSI devices 26a, 26b. It should be noted that only the HBA board 10 is housed within the host computer 16 and that the SCSI devices 26a, 26b are external to the host computer. In particular, the external SCSI connector 18 is joined to one end of an external SCSI cable 28, and the other end of the cable 28 is connected to the external SCSI device 26a. The external SCSI device 26b is also joined to the external SCSI device 26a via another external SCSI cable 30.

In use, the detection circuit of the termination circuit 12 will now detect that there is only the external SCSI device 26a connected to the host adapter board 10. Similarly, there is sensed that no internal SCSI device (i.e., device 14a) has been connected to the internal SCSI connector 20. As a result, the active terminators of the termination circuit means 12 will again be enabled (inserted) automatically so as to effect the proper termination at the HBA board.

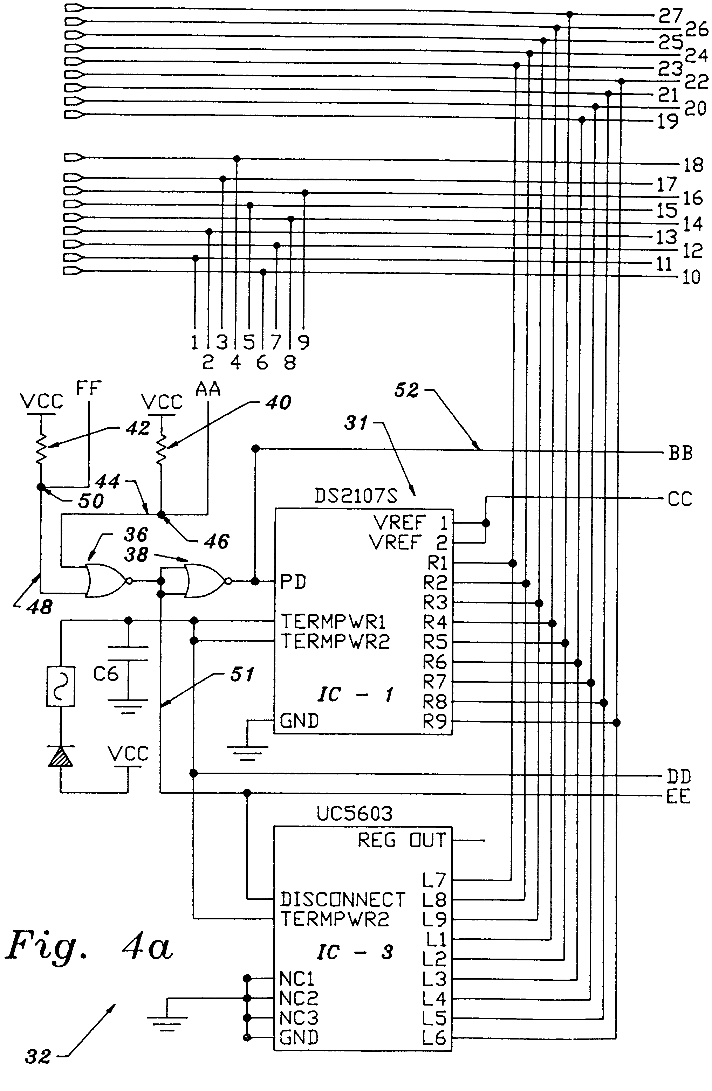

In Figure 3, there is depicted a third SCSI bus configuration in which the host bus adapter board 10 having the termination circuit means 12 of the present invention is coupled to the first internal SCSI device 14a and to the first external SCSI device 26a. Specifically, the internal connector 20 is joined to the first internal SCSI device 14a via the internal cable 22, and the external connector 18 is joined to the first external SCSI device 26a via the external cable 28. In this configuration, the detector circuit will sense that both the internal SCSI device 14a and the external SCSI device 26a have been connected to the host bus adapter board 10. Consequently, the active terminators of the termination circuit means 12 will be automatically disabled so as to remove its termination at the HBA board since each end of the SCSI bus line has already been properly terminated with the external and internal SCSI devices.

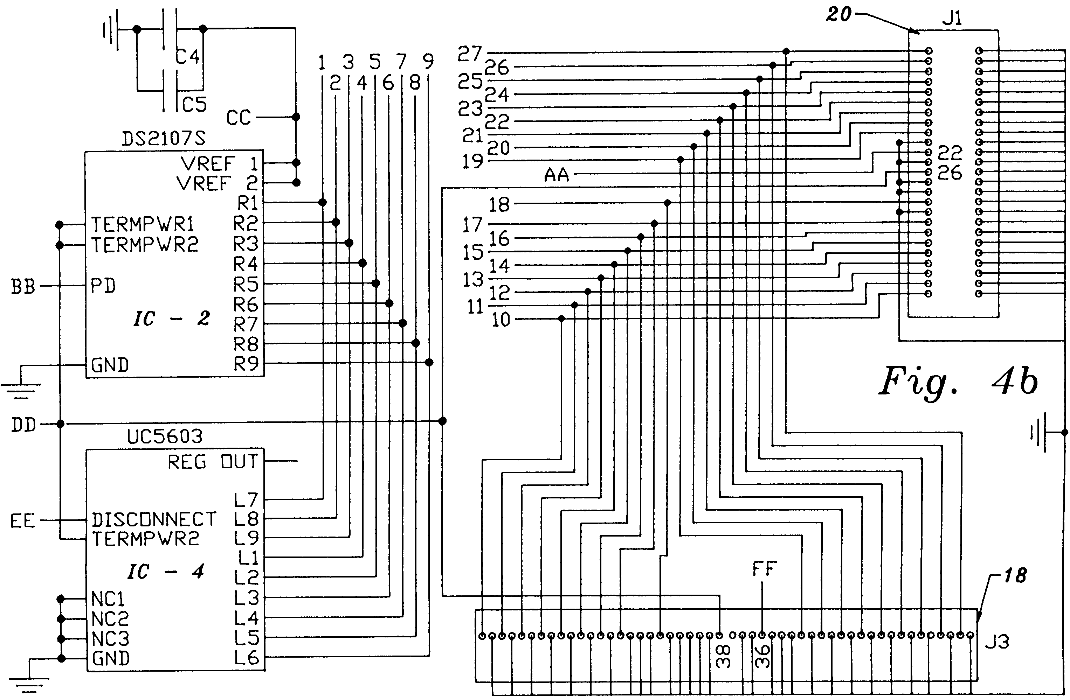

A schematic circuit diagram of a portion of the HBA board 10 with the termination circuit means 12 of Figures 1-3 is illustrated in Figures 4a and 4b when connected together. The termination circuit means 12 is comprised of two pairs of active terminators 31, 32 and a detection circuit 34. While there are shown two pairs of active terminators, it will be understood by those skilled in the art that only one pair of the active terminators is used at a time. In other words, either the active terminators 31 or 32 will be utilized alternately. The first pair of active terminators 31 are formed by integrated circuit terminator chips IC1 and IC2, each being similar to DS2107S which is manufactured and sold by Dallas Semiconductor. Each of the integrated circuit terminator chips IC1, IC2 has its input pins 1 and 9 connected to receive an input termination power supply voltage TERMPWP, which is typically at +5.0 volts. Each of the terminator chips is a 9-channel active terminator and also has output pins 2-6 and 10-13 which define corresponding data and/or control signal lines. Thus, the first pair of the active terminators provide the required 18 signal lines. Each of the terminator chips IC1, IC2 also has an enable pin 16 (PD) which allows the termination to be inserted to the SCSI bus line when it is driven to a high logic level. When the enable pin 16 is driven to a low logic level, the termination is removed from the SCSI bus line. It will be noted that the output pins 2-6 and 10-13 on the terminator chips IC1 and IC2 are coupled to both the internal SCSI connector 20 (J1) and to the external SCSI connector 18 (J3).

Similarly, the second pair of active terminators 32 are formed by integrated circuit terminator chips IC3 and IC4, each being similar to UC5603, which is manufactured and sold by Unitrode Integrated Circuits. Each of the integrated circuit terminator chips IC3, IC4 has its input pin 11 connected to receive also the input voltage TERMPWP. Each of the terminator chips is a 9-channel active terminator and has output pins 1-3, 7-10, and 15-16 which define the nine corresponding data and/or control signal lines. Accordingly, the second pair of active terminators 32 will also provide the required 18 signal lines. Each of the terminator chips IC3 and IC4 also has an enable pin 6 (DISCONNECT), which allows the termination to be inserted to the SCSI bus line when it is driven to a low logic level. When the enable pin 6 is driven to a high logic level, the termination is removed from the SCSI bus line. It should be noted that the output pins 1-3, 7-10, and 15-16 on the terminator chips IC3 and IC4 are also both coupled to the internal SCSI connector 20 (J1) and to the external SCSI connector 18 (J3).

As is required by the SCSI-II specification standard, the internal SCSI connector 20 must have one pin which is defined to be tied to the ground potential and the external connector 18 must also have one pin which is defined to be tied to the ground potential. For example, the normally-tied-low pin on the internal connector 20 may be such as pin 22 and the normally-tied-low pin on the external connector 18 may be such as pin 36. The inventor has discovered the detector circuit 34 of the present invention which automatically detects or senses the connection(s) of the internal and/or external SCSI devices to the HBA board 10 by utilizing these normally-tied-low pins of the internal and external connectors.

In particular, the detection circuit 34 includes a pair of NOR logic gates 36, 38 and a pair of resistors 40, 42. The first logic gate 36 has a first input on line 44 connected to a node 46 and has a second input on line 48 connected to a node 50. The output of the NOR logic gate 36 is connected to the enable pins 6 of the terminator chips IC3 and IC4 via line 51. The resistor 40 has its one end connected to the node 46 and its other end connected to a power supply potential VCC. The node 46 is also connected to the normally-tied-low pin 22 on the internal connector 20. However, it will be noted that the pin 22 on the internal connector 20 located on the host bus adapter board 10 has been disconnected from the ground potential.

Similarly, the resistor 42 has its one end connected to the node 50 and its other end connected to the power supply potential VCC. The node 50 is also connected to the normally-tied-low pin 36 on the external connector 18. Again, it should be understood that the pin 36 on the external connector 22 located on the host bus adapter board 10 has been likewise disconnected from the ground potential. The second NOR logic gate 38 has its two inputs tied together and to the output of the first logic gate 36. The output of the second logic gate 38 is connected to the enable pin 16 of the terminator chips IC1 and IC2 via line 52.

The operation of the detection circuit 34 and the active terminators 31, 32 of the Figure 4 will now be explained with reference to Figures 1 through 3. In Figure 1, the internal connector (not shown) of the internal SCSI device 14a is connected to the HBA board 10 via the cable 22 and the internal connector 20. Accordingly, the node 46 on the detection circuit will be pulled low by the ground pin (i.e., pin 22) located on the internal connector of the internal SCSI device 14a. Since there is no external SCSI device connected to the HBA board 10, the node 50 on the detection circuit will be pulled high. Under these conditions, the output of the first NOR logic gate 36 will be at a low logic level so as to automatically enable the second pair of active terminators IC3, IC4, and the output of the second NOR logic gate 38 will be at a high logic level so as to also automatically enable the first pair of active terminators IC1 and IC2.

In Figure 2, the external connector (not shown) of the external SCSI device 26a is connected to the HBA board via the external cable 28 and the external connector 18. Therefore, the node 50 on the detection circuit will be pulled low by the ground pin (i.e., pin 36) located on the external connector of the external SCSI device 26a. Since there is no internal SCSI device connected to the HBA board, the node 46 on the detection circuit will be pulled high. Under these conditions, the output of the first NOR logic gate 36 will again be at a low logic level so as to automatically enable the second pair of active terminators IC3, IC4, and the output of the second NOR logic gate 38 will be at a high logic level so as to also automatically enable the first pair of active terminators IC1 and IC2.

In Figure 3 of the drawings, the internal connector of the internal SCSI device 14a is connected to the HBA board 10 via the internal cable 22 and the internal connector 20, and the external connector of the external SCSI device 26a is connected to the HBA board via the external cable 28 and the external connector 18. Therefore, the node 46 on the detection circuit 34 will be pulled low by the ground pin located on the internal connector of the internal SCSI device 14a. Further, the node 50 on the detection circuit 34 will likewise be pulled low by the ground pin located on the external connector of the external SCSI device 26a. Under these conditions, the output of the first NOR logic gate will be at a high logic level so as to automatically disable the second pair of active terminators IC3 and IC4. Also, the output of the second NOR logic gate 38 will be at a low logic level so as to also automatically disable the first pair of active terminators IC1 and IC2.

It can be seen that the first pair of active terminators IC1, IC2 require an enable signal which is at an active high for insertion of the termination and that the second pair of active terminators IC3, IC4 require an enable signal which is at an active low for insertion of the termination. Therefore, it should be apparent to those skilled in the art that if the second pair of active terminators is the one being used (similar to the type UC5603 terminators) then the first pair of active terminators IC1, IC2 will not be plugged into the printed circuit board or vice versa.

The termination circuit means of the present invention has the following advantages over the prior art:
(a) It does not require the user to be aware of the condition of the host bus adapter board in the SCSI daisy chain;
(b) It automatically enables/disables the active terminators when the external and/or internal SCSI devices are connected to the host adapter thereby totally eliminating manual manipulation;
(c) It is implemented with minimal number of components so as to only increase slightly the overall system costs; and
(d) It eliminates the need for software programming in order to effect a termination configuration.

From the foregoing detailed description, it can thus be seen that the present invention provides an improved termination circuit means for use on a SCSI host bus adapter which automatically inserts and removes the SCSI terminator on the host adapter dependent upon the connections of the internal and/or external SCSI devices to the host bus adapter. The termination circuit means of the present invention is formed of active terminators and a detection circuit for automatically detecting the presence of a connection of an internal SCSI device and/or external SCSI device to the host adapter so as to generate an enable signal. Active terminators are provided which are responsive to the enable signal for selectively enabling termination.

While there has been illustrated and described what is at present considered to be a preferred embodiment of the present invention, it will be understood by those skilled in the art that various changes and modifications may be made, and equivalents may be substituted for elements thereof without departing from the true scope of the invention. In addition, many modifications may be made to adapt a particular situation or material to the teachings of the invention without departing from the central scope thereof. Therefore, it is intended that this invention not be limited to the particular embodiment disclosed as the best mode contemplated for carrying out the invention, but that the invention will include all embodiments falling within the scope of the appended claims.

## Claims

1. A termination circuit for use in a SCSI host bus adapter which automatically inserts or removes an active terminator on the host adapter comprising:
internal connector means for generating a first logic signal which is either high or low dependent upon whether an internal SCSI device is connected thereto;
external connector means for generating a second logic signal which is either high or low dependent upon whether an external SCSI device is connected thereto;
active terminator means responsive to an enable signal for automatically inserting or removing termination on the host bus adapter; and
detection means responsive to the first logic signal from said internal connector means and to the second logic signal from said external connector means for generating said enable signal.

2. A termination circuit as claimed in Claim 1, wherein said internal connection means comprises an internal SCSI connector.

3. A termination circuit as claimed in Claim 2, wherein said external connection means comprises an external SCSI connector.

4. A termination circuit as claimed in Claim 3, wherein said active terminator means comprises one pair of integrated circuit terminator chips.

5. A termination circuit as claimed in Claim 4, wherein said one pair of integrated circuit terminator chips comprises two 9-channel active terminators each having an enable pin for receiving said enable signal.

6. A termination circuit as claimed in Claim 5, wherein said detection means comprises gating logic means formed of a first NOR logic gate having a first input connected to receive said first logic signal, a second input connected to receive said second logic signal, and an output for providing said enable signal.

7. A termination circuit as claimed in Claim 6, wherein said detection means further includes first resistor having its one end connected to a power supply potential and its other end connected to the first input of said first NOR logic gate and to a first internal node, and a second resistor having its one end connected to the power supply potential and its other end connected to the second input of said first NOR logic gate and to a second internal node.

8. A termination circuit as claimed in Claim 7, wherein said first internal node is -connected to said internal connector, said first node being at a high logic level when no internal SCSI device is connected and being at a low logic level when the internal SCSI device is connected thereto.

9. A termination circuit as claimed in Claim 8, wherein said second node is connected to said external connector, said second node being at a high logic level when no external SCSI device is connected and being at a low logic level when the external SCSI device is connected thereto.

10. A termination circuit for use in a SCSI host bus adapter which automatically inserts or removes an active terminator on the host adapter comprising:
active terminator means responsive to an enable signal for automatically inserting or removing termination on the host bus adapter; and
detection means responsive to a first logic signal from internal connector means and to a second logic signal from external connector means for generating said enable signal.

11. A termination circuit as claimed in Claim 10, wherein said active terminator means comprises one pair of integrated circuit terminator chips.

12. A termination circuit as claimed in Claim 11, wherein said one pair of integrated circuit terminator chips comprises two 9-channel active terminators each having an enable pin for receiving said enable signal.

13. A termination circuit as claimed in Claim 12, wherein said detection means comprises gating logic means formed of a first NOR logic gate having a first input connected to receive said first logic signal, a second input connected to receive said second logic signal, and an output for providing said enable signal.

14. A termination circuit as claimed in Claim 13, wherein said detection means further includes first resistor having its one end connected to a supply potential and its other end connected to the first input of said first NOR logic gate and to a first internal node, and a second resistor having its one end connected to the supply potential and its other end connected to the second input of said first NOR logic gate and to a second internal node.

15. A termination circuit as claimed in Claim 14, wherein said first internal node is connected to said internal connector, said first node being at a high logic level when no internal SCSI device is connected and being at a low logic level when the internal SCSI device is connected thereto.

16. A termination circuit as claimed in Claim 15, wherein said second node is connected to said external connector, said second node being at a high logic level when no external SCSI device is connected and being at a low logic level when the external SCSI device is connected thereto.

17. A termination circuit for use in a SCSI host bus adapter which automatically inserts or removes an active terminator on the host adapter comprising:
means for automatically detecting the presence of connections of an internal SCSI device and/or external SCSI device to the host adapter so as to generate an enable signal; and
active terminator means responsive to said enable signal for selectively enabling its termination.

18. A termination circuit as claimed in Claim 17, wherein said active terminator means comprises one pair of integrated circuit terminator chips.

19. A termination circuit as claimed in Claim 18, wherein said one pair of integrated circuit terminator chips comprises two 9-channel active terminators each having an enable pin for receiving said enable signal.

20. A termination circuit as claimed in Claim 19, wherein said detection means comprises gating logic means formed of a first NOR logic gate having a first input connected to receive a first logic signal, a second input connected to receive a second logic signal, and an output for providing said enable signal.
